# NEUE EUROPÄISCHE PATENTSCHRIFT

(11) **EP 2 371 974 B2**
(45) Veröffentlichungstag und Bekanntmachung des Hinweises auf die Entscheidung über den Einspruch: **11.09.2019**
(45) Hinweis auf die Patenterteilung: 27.04.2016
(21) Anmeldenummer: 10014733.9
(22) Anmeldetag: 18.11.2010
(51) Int. Cl.: C21D 9/00, C21D 1/30, C21D 9/50, B62D 25/14, B62D 21/15, B60R 19/02, B21D 53/88, C21D 1/673, C21D 1/09

(54) **Verfahren zum partiellen Wärmebehandeln einer Kraftfahrzeugkomponente**
Method for partially heat treating a motor vehicle component
Procédé de traitement thermique partiel d'un composant de véhicule automobile

(30) Priorität: 25.03.2010 DE 102010012830
(43) Veröffentlichungstag der Anmeldung: 05.10.2011
(60) Teilanmeldung: 16158989.0
(73) Patentinhaber: Benteler Automobiltechnik GmbH, 33102 Paderborn (DE)
(72) Erfinder: Pellmann, Markus, 48336 Sassenberg (DE); Pohl, Martin, Dr., 33184 Altenbeken (DE); Schroeter, Martin, 33102 Paderborn (DE); Buschsieweke, Otto, 33102 Paderborn (DE); Handing, Christian, Dr., 33449 Langenberg (DE); Adelbert, Stefan, 33129 Delbrück (DE)
(74) Vertreter: Ksoll, Peter

(56) Entgegenhaltungen:
- EP-A1- 2 143 621
- EP-A1- 2 561 946
- WO-A1-2009/135776
- WO-A1-2010/076247
- WO-A2-2008/048307
- DE-A1- 19 743 802
- DE-A1-102004 023 579
- DE-A1-102008 044 523
- DE-B3-102008 021 492
- DE-C1- 4 422 137
- US-A- 5 916 389
- US-A- 5 972 134
- US-A1- 2002 069 506
- US-A1- 2007 261 769
- CARLSSON ET AL: "Manufacturing of parts in ultra high strength steel using local heat treatment", PROCEEDINGS OF ESDA 2006, 8TH BIENNIAL ASME CONFERENCE ON ENGINEERING SYSTEMS DESIGN AND ANALYSIS, 4 July 2006 (2006-07-04), - 7 July 2006 (2006-07-07), pages 1-4, XP055349448, Torino, IT
- HEIN et al: "Status and Innovation trends in Hot Stamping of USIBOR 1500 P", STEEL RESEARCH INTERNATIONAL, vol. 79, no. 2, 2008, XP009101799,
- ALEXEY V. SVERDLIN, ARNOLD R. NESS: ; "Chapters 4.1 and 4.2" In: TOTTEN, G. E.: "Steel Heat Treatment handbook, 2nd ed.", 2007, CRC PRESS/TAYLOR & FRANCIS GROUP, Boca Raton (Florida, USA), XP055349459, ISBN: 978-0-8493-8455-4 pages 1-12-165-184,
- M. BLAIR et al.: "Steel Castings Handbook, 6th ed.", 1995, STEEL FOUNDER'S SOCIETY OF AMERICA AND ASM INTERNATIONAL, XP055349469, pages 24-1-24-5,
- R. GEORGE ET AL: "Localized die temperature control for tailored properties in hot forming of boron steels - Numerical study", IDDRG 2009 INTERNATIONAL CONFERENCE, 1 June 2009 (2009-06-01) - 3 June 2009 (2009-06-03), XP055349477, Golden, CO, USA
- D. BERGLUND ET AL: "Hot stamped components with ''soft zones'' for improved crash worthiness-simulation and validation of product performance", IDDRG 2009 INTERNATIONAL CONFERENCE, 16 JUNE 2008 - 18 JUNE 2008, XP055349484, Olofström, Sweden
- M. HEYDE ET AL: "Local heat treatment of ultra-high-strength steels - an opportunity to extend the range of car body components", DDRG - 50TH ANNIVERSARY CONFERENCE; TOOLS AND TECHNOLOGIES FOR THE PROCESSING OF ULTRA HIGH STRENGTH STEELS : CONFERENCE PROCEEDINGS, 31 May 2010 (2010-05-31), XP055300189, Graz / Austria

## Beschreibung

Die vorliegende Erfindung betrifft ein Verfahren zur Herstellung einer Kraftfahrzeugkomponente, bestehend aus mindestens einem warmgeformten und pressgehärteten Bauteil aus hochfestem Stahl gemäß Patentanspruch 1.

Aus der DE 10 2005 054 847 B3 sind warmgeformte und pressgehärtete Bauteile, die nach dem Endformen und dem Einstellen hochfester mechanischer Eigenschaften im Stahl einer gezielten Wärmebehandlung unterzogen werden, bekannt. Insbesondere bei Struktur- und/oder Sicherheitsbauteilen, die im Crashfall axial belastet werden, soll ein nach der vorgenannten Art hergestelltes Bauteil einerseits hochfest sein und andererseits im Crashfall Falten werfen, um Energie gezielt abzubauen.

Eine Wärmebehandlung findet gemäß dem Stand der Technik üblicherweise in einem Temperaturbereich zwischen 320°C und 400°C statt und verändert die im Warmform- und Presshärteprozess eingestellten Festigkeitswerte kaum. Gleichzeitig wird jedoch die Duktilität des Werkstoffes derart erhöht, dass im Crashfall eine Faltenbildung möglich ist. Ferner sind aus der DE 197 43 802 A1 sowie der DE 10 2004 023 579 A1 Herstellungsverfahren für ein Stahlbauteil mit hochfesten Eigenschaften bekannt, das partiell wärmenachbehandelt wird.

Mit den aus dem Stand der Technik bekannten Verfahren ist für viele Serienproduktionsprozesse eine hinreichend zielgenaue Einstellung der gewünschten Werkstoffkonfiguration möglich.

Aufgabe der vorliegenden Erfindung ist es daher, ein Verfahren zur Herstellung einer Kraftfahrzeugkomponente aufzuzeigen, mit dem es möglich ist, ein gezieltes Werkstoffgefüge großserientauglich in warmgeformten und pressgehärteten Bauteilen kostengünstig herzustellen. Weiterhin ist es Aufgabe der vorliegenden Erfindung ein mit diesem Verfahren hergestelltes Bauteil aufzuzeigen.

Die vorliegende Aufgabe wird mit einem Verfahren zur Herstellung einer Kraftfahrzeugkomponente gemäß Patentanspruch 1 gelöst.

Weitere Ausführungsformen sind Bestandteil der abhängigen Patentansprüche.

Die vorliegende Erfindung beinhaltet ein Verfahren zur Herstellung einer Kraftfahrzeugkomponente bestehend aus mindestens einem warmgeformten und pressgehärteten Bauteil aus hochfestem Stahl, wobei die Kraftfahrzeugkomponente als Strukturbauteil und/oder Sicherheitsbauteil für ein Kraftfahrzeug eingesetzt wird, mit folgenden Verfahrensschritten:
- Partielles Wärmebehandeln der Kraftfahrzeugkomponente in Bereichen, wobei die Bereiche zunächst auf eine Aufwärmtemperatur in einem Temperaturbereich zwischen 550° und 800° C, insbesondere zwischen 700° und 800° C aufgewärmt werden, wobei die Erwärmung mittels Induktion und/oder Infraroterwärmung erfolgt;
- Halten der Aufwärmtemperatur für eine Haltezeit kleiner als 30 Sekunden,
- Abkühlen von der Aufwärmtemperatur in mindestens zwei Phasen, wobei die zweite Phase direkt auf die erste Phase folgt und die Abkühlzeit der ersten Phase in Relation zu der Abkühlzeit der zweiten Phase länger andauernd durchgeführt wird, wobei die zweite Phase in einem Zeitraum bis zu 120 Sekunden, vorzugsweise bis zu 60 Sekunden durchgeführt wird, wobei das Bauteil (8, 9) durch die erste Phase des Abkühlens auf eine Temperatur zwischen 500° C und 700° C abgekühlt wird und das Bauteil durch die zweite Phase auf eine Temperatur unter 200° C abgekühlt wird,
- wobei ein Übergangsbereich zwischen dem warmgeformten und pressgehärteten nicht wärmebehandelten Bereich und dem partiell wärmebehandelten Bereich zwischen 1 und 50 mm ausgebildet wird.

Ein Vorteil des erfindungsgemäßen Verfahrens ist, dass die in der Kraftfahrzeugkomponente gewünschten Werkstoffeigenschaften gezielt und prozesssicher herstellbar sind. Das mittels Warmform und Presshärten hergestellte Bauteil weist eine harte und spröde Struktur auf. Durch die partielle Wärmebehandlung mit dem erfindungsgemäßen Verfahren unterhalb der Austenitisierungstemperatur wird das Bauteil in den wärmebehandelten Bereichen in seinem Werkstoffgefüge umgewandelt, so dass hier ein tendenziell duktileres Werkstoffgefüge auftritt. Die Aufwärmung beginnt im Rahmen der Erfindung bei einer Starttemperatur, die das Bauteil nach dem Presshärteprozess aufweist. Beispielsweise kann es sich dabei um die Umgebungstemperatur handeln, oder. Die Starttemperatur der Aufwärmung ist aber immer kleiner als die Martensit Starttemperatur (MS), vorzugsweise unterhalb von 200°C.

Durch den Temperaturbereich zwischen 500°C und 900°C für das Aufwärmen bzw. das Halten der Aufwärmtemperatur ergibt sich ein besonders vorteiliger Spannungsabbau in den gezielt wärmebehandelten Bereichen, beispielsweise an Fügeflanschen oder aber an Randstellen von Aussparungen, die einer erfindungsgemäßen Wärmebehandlung unterzogen werden.

Am Beispiel einer Kraftfahrzeugkomponente, die als Strukturbauteil oder Sicherheitsbauteil in eine selbsttragende Karosserie eingesetzt ist, wirkt sich der wärmebehandelte Bereich besonders vorteilig auf die Crasheigenschaft der Karosserie im Einsatzbereich der Kraftfahrzeugkomponente aus. Ist beispielsweise ein Bereich in Form eines Fügeflansches mit dem erfindungsgemäßen Verfahren wärmebehandelt worden, so neigt dieser Fügeflansch nicht zu einem Auf- bzw. Ausreißen oder aber zu einer Rissbildung im Falle eines Unfalles und hält somit die umliegenden Struktur- bzw. Sicherheitsbauteile zusammen. Gerade unter Berücksichtigung eines Fahrgastinnenraumes wirkt sich dies besonders vorteilig auf den Insassenschutz aus. Unter einem Fügeflansch ist im Rahmen der Erfindung ein Flanschbereich zu verstehen, der zur Anbindung eines anderen Bauteils oder einer Bauteilkomponente vorgesehen ist. Die Anbindung kann dabei durch Kleben, Nieten, Schweißen, Löten oder ähnliche Koppelungsprozesse hergestellt werden.

Ein weiterer Vorteil ergibt sich in Bereichen, die im Falle eines Unfalles einer gewollten Verformung ausgesetzt sind. Diese Verformung ist vorgesehen, um Energie zum Abbau in die Karosserie einzuleiten, so dass hier wiederum die Crashsicherheit für Fahrzeuginsassen steigt. Ein weiterer Anwendungsfall ist beispielsweise auch das gezielte Deformieren einzelner Bereiche, um eine besonders günstige Unfallreparatur zu ermöglichen.

Die mit dem erfindungsgemäßen Verfahren wärmebehandelten Bereiche können dabei im Crashfall so deformiert werden, dass eine gezielte Einfaltung und somit gezielte Energieaufnahme stattfindet. Weiterhin tendieren die wärmebehandelten Bereiche weniger zu einer Rissbildung, da ihr Gefüge gegenüber dem warmgeformten und pressgehärteten, harten und spröden Gefüge eher duktil ist.

Das erfindungsgemäße Verfahren stellt die gewünschten Werkstoffeigenschaften großserientauglich besonders prozesssicher her. Eine Fertigungsstreuung in Form von Fertigungstoleranzen kann somit weitestgehend vermieden werden, so dass beispielsweise im Anwendungsfall einer durch gezielte CAD-Berechnung konstruierten Karosserie mit besonderen Crashpunkten eine hohe Fertigungsgenauigkeit durch Einsatz von mit dem erfindungsgemäßen Verfahren hergestellten Kraftfahrzeugkomponenten sichergestellt wird.

In einer bevorzugten Ausführungsform wird die partielle Wärmebehandlung an Fügeflanschen des Bauteils durchgeführt. Hierdurch ergibt sich der Vorteil, dass die Fügeflansche eine duktile Werkstoffeigenschaft aufweisen. Im Falle einer stoffschlüssigen Verbindung mittels thermischen Fügens findet hier eine Gefügeumwandlung in der Wärmeeinflusszone des Fügeverfahrens statt. Ein duktiler Abschnitt des Bauteils wirkt sich hierbei besonders vorteilig auf den Schweißprozess und die sich nach dem Schweißprozess in der Wärmeeinflusszone einstellenden Werkstoffgefüge aus. Auch diese werden durch eine mit dem erfindungsgemäßen Verfahren durchgeführte partielle Wärmebehandlung in einen duktilen Werkstoffgefügebereich überführt. Dies wirkt sich bei einem Unfall des Kraftfahrzeugs wiederum besonders vorteilig auf die Haltbarkeit der verbundenen Schweißnähte aus. Unter Schweißnähte sind im Rahmen der Erfindung alle mittels thermischen Fügens hergestellten Schweißnähte zu verstehen. Dabei kann es sich beispielsweise um durchgezogen Längsschweißnähte aber auch Punktschweißungen oder aber auch unterbrochene Schweißnähte handeln.

In einer weiteren bevorzugten Ausführungsform wird die partielle Wärmebehandlung an Aussparungen des Bauteils durchgeführt. Diese Aussparungen können beispielsweise aus gewichtsoptimierten Gründen oder aber auch aus Gründen der Durchführung von anderen Komponenten, beispielsweise eines Schalthebels oder aber auch eines Kabelbaums oder ähnlichem, in dem Bauteil vorhanden sein. Gerade im Bereich der Aussparungen und auch im Endbereich von Aussparungen kann es hierbei im Falle eines Unfalles zu Rissbildungen kommen, die sich über das gesamte Bauteil erstrecken können. Durch Reduzierung der Oberflächenspannung stellt sich in diesem Bereich ein duktiles Werkstoffgefüge ein. Dieses steht einer Rissbildung und somit auch einer erleichterten ungewollten Deformation des Bauteils entgegen.

Auch können Belastungen durch Biegewechselspannungen, die beispielsweise durch Karosserietorsion oder aber durch andere Fahreinflüsse, beispielsweise Motorschwingungen oder ähnlichem, in die Karosserie eingeleitet werden, hierdurch besonders vorteilig beeinflusst werden. Gerade in Bezug auf die Langlebigkeit einer Kraftfahrzeugkarosserie kann durch Reduzierung der Oberflächenspannung im Endbereich von Aussparungen ein besonders positiver Effekt durch ein partielles Wärmebehandeln mit dem erfindungsgemäßen Verfahren erzielt werden.

In einer weiteren besonders bevorzugten Ausführungsform ist die Fahrzeugkomponente aus mindestens zwei Bauteilen durch Koppelung gebaut und die Wärmebehandlung wird an den Koppelungsstellen durchgeführt. Bei den mindestens zwei Bauteilen kann es sich hierbei mindestens um zwei warmgeformte und pressgehärtete Bauteile handeln. Es kann sich aber auch um nur ein warmgeformtes und pressgehärtetes Bauteil handeln, das mit einem zweiten, durch einen konventionellen Fertigungsprozess oder Blechbearbeitungsprozess hergestellten Bauteil gekoppelt wird, handeln. Hierbei ist besonders vorteilig, dass das warmgeformte und pressgehärtete Bauteil mit den gleichen positiven erfindungsgemäßen Effekten versehen wird, die bereits zuvor genannt wurden.

Weiterhin wirkt sich eine Behandlung der Koppelungsstellen mit einem erfindungsgemäßen Verfahren ebenfalls besonders vorteilig auf deren Belastbarkeit und Langlebigkeit aus. Im Bereich der Koppelung durch thermisches Fügen entsteht in einer Schweißnaht eine Wärmeeinflusszone, die wiederum eine Gefügeumwandlung mit sich bringt. Unter Berücksichtigung des hergestellten Koppelungsprozesses, beispielsweise durch Schutzgasschweißen, Laserschweißen, Punktschweißen, Rollnahtschweißen oder ähnlichem, entstehen verschiedene Werkstoffeigenschaften, die teilweise auch unerwünschte Nebeneffekte mit sich bringen. Aus wirtschaftlichen Gründen der Großserie überwiegen jedoch die Vorteile des jeweiligen eingesetzten Schweißprozesses unter Inkaufnahme der Nachteile. Diese Nachteile können jedoch mit dem erfindungsgemäßen Verfahren großserientauglich in kostengünstiger Art und Weise beseitigt werden.

Die Wärmebehandlung der Schweißnähte wirkt sich dadurch besonders vorteilig auf deren Langlebigkeit, Korrosionsbeständigkeit und Deformationsfähigkeit aus.

Vorzugsweise wird die Aufwärmung in einem Zeitraum bis zu 30 Sekunden, bevorzugt bis zu 20 Sekunden, besonders bevorzugt bis 10 Sekunden, insbesondere bis 5 Sekunden durchgeführt. Die Aufwärmung kann dabei gemäß dem erfindungsgemäßen Verfahren in einem progressiven, linearen oder degressiven Temperaturanstieg über der Zeit erfolgen. Eine kurze Aufwärmphase zum Erreichen der Aufwärmtemperatur wirkt sich in Kombination mit einer sich an diese anschließende Haltephase, in der die Aufwärmtemperatur in einer Haltezeit gehalten wird, besonders vorteilig auf die Prozesssicherheit der partiellen Wärmebehandlung aus.

Die Haltezeit liegt in einem Zeitraum bis zu 30 Sekunden. Bevorzugt liegt die Haltezeit in einem Zeitraum bis zu 20 Sekunden, besonders bevorzugt bis 10 Sekunden, insbesondere bis 5 Sekunden. Durch die gezielte Werkstoffgefügeumwandlungssteuerung bei konstanter Temperatur, nur beeinflusst durch die Dauer der Haltezeit, ist der Vergütungsprozess im Rahmen der Erfindung besonders prozesssicher durchführbar. Für die Haltezeit wird dabei im Wesentlichen die erreichte Aufwärmtemperatur gehalten. Ein weiterer Temperaturanstieg oder auch Temperaturabfall während der Haltezeit ist im Rahmen der Erfindung auch vorstellbar. Dieser liegt in einem Rahmen einer Temperaturdifferenz zur Aufwärmtemperatur bis zu maximal 100 °C.

Ein weiterer sich ergebender Vorteil aus den kleinen Zeiträumen der Aufwärmung und Haltezeit ist, dass ein Wärmeübergang in Form von Wärmeleitung weitestgehend vermieden wird. Weiterhin kann das erfindungsgemäße Verfahren besonders vorteilig in die Taktzeit von bestehenden Produktionsprozessen mit Warmumformungsschritten und weiteren folgenden Fertigungsschritten integriert werden. Die Taktzeiten können dabei in einem Zeitfenster zwischen 5 Sekunden und 30 Sekunden, bevorzugt zwischen 10 Sekunden und 15 Sekunden liegen.

Die Verfahrensschritte des Aufwärmens und Haltens können dabei in einer einzigen Vorrichtung stattfinden, die auch dazu genutzt wird, das Bauteil warm umzuformen und presszuhärten. Die Bauteile können aber auch nach dem Warmumformen und Presshärten in eine separate Vorrichtung verbracht werden, in der die Aufwärmung und das Halten der Aufwärmtemperatur stattfinden. Das Aufwärmen und Halten der Temperatur selber kann durch induktive Erwärmung oder ähnliche Erwärmungsmöglichkeiten, die sich je nach Anwendungsfall in den Produktionsprozess einbinden lassen, durchgeführt werden.

Das Abkühlen wird in mindestens zwei Phasen durchgeführt. Es wird die erste Abkühlungsphase in Relation zu der zweiten Abkühlungsphase zeitlich länger andauernd durchgeführt. Die Abkühlphasen können dabei ebenfalls wiederum in einer einzigen Vorrichtung oder aber in der Vorrichtung der Wärmebehandlung oder aber in einem separaten Abkühlbehälter durchgeführt werden. Auch ist im Rahmen der Erfindung vorstellbar, die mindestens zwei verschiedenen Abkühlphasen in zwei separaten Abkühlbehältern durchzuführen.

Durch die Mehrphasigkeit des Abkühlvorgangs der erfindungsgemäßen Wärmebehandlung ist es wiederum möglich, die gewünschte Gefügeumwandlungsstufe und somit die gewünschte Werkstoffeigenschaft in den partiell wärmebehandelten Bereichen besonders prozesssicher, kosteneffizient und mit hoher Genauigkeit durchzuführen. Auch ist es möglich, durch die Mehrphasigkeit der Abkühlung den Abkühlprozess in die laufende Produktion eines herzustellenden Bauteils so einzubinden, dass er an die Taktzeiten von vorhergehenden und nachfolgenden Bearbeitungsschritten individuell in einem großen Spektrum eingestellt werden, ohne sich qualitativ nachteilig auf die erzielbaren Gefügeumwandlungen auszuwirken.

Die zweite Abkühlphase wird in einem Zeitraum von bis zu 120 Sekunden, vorzugsweise bis zu 60 Sekunden, durchgeführt.

Durch die erste Phase des Abkühlens wird die Kraftfahrzeugkomponente auf eine Temperatur zwischen 500 °C und 700 °C abgekühlt.

In einer zweiten Phase wird die Kraftfahrzeugkomponente auf eine Zieltemperatur abgekühlt. Die Zieltemperatur liegt im Rahmen der Erfindung unterhalb von 200°C. Ab einer Bauteiltemperatur von unter 200°C tritt kein thermisch verursachter Bauteilverzug mehr auf, der sich auf die Produktionssicherheit des Verfahrens negativ auswirkt. Es ist jedoch im Rahmen der Erfindung auch vorstellbar, dass die Abkühlung bis auf Raumtemperatur durchgeführt wird. Die Abkühlungsverläufe der Temperaturdifferenz bzw. der Temperaturverlauf über die Abkühlzeit kann dabei wiederum im Rahmen der Erfindung sowohl progressiv, linear, als auch degressiv verlaufen. Ein sich hieraus ergebender Vorteil besteht darin, dass nach Erreichen der ersten Abkühltemperatur im Wesentlichen kein Bauteilverzug mehr stattfindet.

In einer erfindungsgemäßen Ausführungsvariante des Verfahrens erfolgt die Erwärmung auf die Aufwärmtemperatur mittels Induktion und/oder Infraroterwärmung. Unter Infraroterwärmung sind im Rahmen der Erfindung beispielsweise Infrarotstrahler zu verstehen, die eine Lampenerwärmung ermöglichen. Ein sich hieraus im Zusammenhang mit dem Gesamtverfahren ergebender Vorteil ist, dass sehr kleine lokale Bereiche wärmebehandelt werden können, die einen klar definierten Grenzbereich aufweisen. Der Übergangsbereich zwischen dem warmumgeformten und pressgehärteten nicht wärmebehandelten Bereich und dem partiell wärmebehandelten Bereich beträgt mit dem erfindungsgemäßen Verfahren unter 50 Millimeter und insbesondere zwischen 1 und 20 Millimeter. Hierdurch können gezielt kleine scharf berandete Bereiche lokal wärmebehandelt werden.

Das Karosseriebauteil ist als Strukturbauteil oder Sicherheitsbauteil für ein Kraftfahrzeug mittels Warmformen und Presshärten hergestellt und dadurch gekennzeichnet, dass Fügeflansche und/oder Koppelungsstellen partiell in mehreren Schritten wärmebehandelt sind.

Das so hergestellte Karosseriebauteil weist insbesondere den Vorteil auf, dass es sich im Falle eines Unfalles in gewünschter Art und Weise verformen kann. Dieses bauteilspezifische definierte Verformungsverhalten kann beispielsweise durch Faltenbildung ausgebildet sein. Weiterhin sind die Fügeflansche und/oder Kopplungsstellen durch die erfindungsgemäße Wärmebehandlung eher duktil ausgebildet, so dass sie im Falle eines Unfalles eher eine Tendenz zur Verformung als eine Tendenz zum Reißen aufweisen.

Unter einem Karosseriebauteil ist im Rahmen der Erfindung eine A-Säule, B-Säule, C-Säule, D-Säule, ein Bumper, eine Crashbox, ein Längsträger vorne, ein Längsträger hinten, ein Tunnel, beispielsweise in Form eines Getriebetunnels, ein Schweller, ein Querträger, ein Sitzquerträger, ein Fersenblech, ein Dachquerträger, ein Bodenblech, eine Seitenwand, eine Fahrzeugtür, eine Heckklappe, eine Motorhaube, ein Dachbereich oder ein Instrumententräger mit verschiedenen Anbauteilen zu verstehen. Weitere Blechbauteile eines Kraftfahrzeuges können ebenfalls als Karosseriebauteil angesehen werden.

Das Karosseriebauteil ist als Strukturbauteil oder Sicherheitsbauteil für ein Kraftfahrzeug mittels Warmformen und Presshärten hergestellt und dadurch gekennzeichnet, dass crashrelevante Bauteilbereiche partiell in mehreren Schritten wärmebehandelt sind.

Unter einem crashrelevanten Bauteilbereich ist beispielsweise ein Anbindungsbereich einer A-, B- oder C-Säule oder ein Koppelungsbereich eines Schwellers mit einem Quer- oder Längsträger zu verstehen. Insgesamt sind crashrelevante Bauteilbereiche im Rahmen der Erfindung die Bauteilbereiche, die bei einem Fahrzeugcrash besonderen Belastungen ausgesetzt sind. Hierbei handelt es sich beispielsweise um Anbindungsbereiche, die durch Koppelung von zwei Bauteilen charakterisiert sind oder aber Übergangsbereiche, beispielsweise die Radien eines Türausschnittes in einer Fahrzeugkarosserie oder ähnliche Bereiche, an die, im Falle eines Fahrzeugcrashs, hohe Anforderungen in Bezug auf Verformung und Haltbarkeit gestellt werden.

Bei einem Längsträger, der mit dem erfindungsgemäßen Verfahren wärmebehandelt wird, können Bereiche geschaffen werden, die sich im Falle eines Fahrzeugcrashes gezielt verformen. Diese Verformung kann beispielsweise in Form eines Faltens oder aber Einfaltens erfolgen.

Weitere Vorteile, Merkmale und Eigenschaften der vorliegenden Erfindung ergeben sich aus der folgenden Beschreibung, bevorzugte Ausführungsformen anhand der schematischen Zeichnungen. Diese dienen dem einfachen Verständnis der Erfindung. Es zeigen:
- Figur 1: zeigt verschiedene Temperaturverläufe der einzelnen Schritte der Wärmebehandlung über der Zeit;
- Figur 2: eine perspektivische Ansicht einer A-Säule;
- Figur 3: eine perspektivische Ansicht eines Rahmentunnels;
- Figur 4: eine Kraftfahrzeugkomponente bestehend aus zwei miteinander gekoppelten Bauteilen;
- Figur 5: ein Instrumententräger, bestehend aus mehreren Bauteilen und
- Figur 6: einen Stoßfänger mit verschiedenen Anbauteilen.

In den Figuren werden für gleiche oder ähnliche Teile dieselben Bezugszeichen verwendet, wobei entsprechende oder vergleichbare Vorteile erreicht werden, auch wenn eine wiederholte Beschreibung aus Vereinfachungsgründen entfällt.

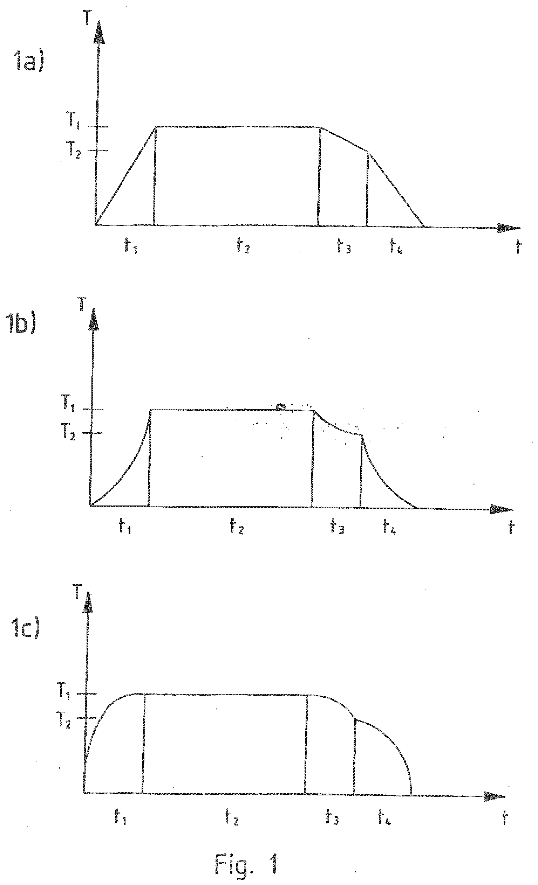

Figur 1a zeigt eine Temperaturverlauf über der Zeit mit den erfindungsgemäßen Zeitabschnitten Aufwärmzeit (t1), Haltezeit (t2), Abkühlzeit erste Phase (t3) und Abkühlzeit zweite Phase (t4). Weiter sind auf der Achse der Temperatur die Aufwärmtemperatur (T1) sowie eine erste Abkühltemperatur (T2) gezeigt.

Beginnend von einer warmumgeformten und pressgehärteten Kraftfahrzeugkomponente, die sich im Wesentlichen auf einer Temperatur unter 200°C befindet, wird diese in der Aufwärmzeit auf die Aufwärmtemperatur (T1) erwärmt. Bei einer Ausgangstemperatur von unter 200°C, jedoch über Raumtemperatur wird im Rahmen der Erfindung die Restwärmeenergie des Warmumform- und Presshärteprozesses für die partielle Wärmebehandlung genutzt.

Die Erwärmung weist einen linearen Temperaturanstieg über die Zeit auf. Nach Abschluss der Aufwärmzeit (t1) wird die Aufwärmtemperatur (T1) für eine Haltezeit (t2) gehalten. Die Aufwärmtemperatur (T1) wird über die gesamte Haltezeit (t2) im Wesentlichen konstant gehalten. Temperaturschwankungen in Form eines Temperaturanstiegs oder Temperaturabfalls sind hier nicht dargestellt, können jedoch im Rahmen der Erfindung während der Haltezeit (t2) aus Gründen der gewünschten Werkstoffgefügeumwandlung oder aber auch aus Kostengründen des Produktionsprozesses stattfinden.

Nach Abschluss der Haltezeit (t2) findet eine erste Abkühlung auf eine Abkühltemperatur (T2) statt. Der Temperaturverlauf fällt dabei linear über die Abkühlzeit der ersten Phase (t3) ab auf die Abkühltemperatur (T2). Die Abkühltemperatur (T2) kann dabei in einem Bereich zwischen 100°C und einer Aufwärmtemperatur (T1) liegen.

In einer daran anfolgenden zweiten Abkühlphase findet eine weitere lineare Temperaturabnahme in der Abkühlzeit der zweiten Phase (t4) statt. Die Temperaturabnahme kann dabei im Wesentlichen auf Raumtemperatur oder aber eine gewünschte, hier nicht näher dargestellte, Zieltemperatur stattfinden. Auch ist es im Rahmen der Erfindung vorstellbar, dass weitere Abkühlphasen, die hier nicht näher dargestellt sind, stattfinden.

Figur 1b zeigt eine im Wesentlichen zeitlich ähnliche Staffelung der Wärmebehandlung mit dem Unterscheid zu Figur 1a, dass der Temperaturanstieg während der Aufwärmzeit (t1) einen progressiven Verlauf aufweist und die Abkühlung während der ersten und der zweiten Phase einen jeweils degressiven Temperaturverlauf über der Zeit (t3, t4) besitzt.

Figur 1c zeigt ergänzend zu Figur 1 a und 1 b, dass der Temperaturverlauf während der Aufwärmzeit (t1) einen degressiven Verlauf aufweist und während der einzelnen Abkühlphasen einen jeweils progressiven Verlauf der Temperaturabnahme über der Zeit (t3, t4) besitzt.

Im Rahmen der Erfindung ist es auch vorstellbar, den Temperaturverlauf über der Zeit in Mischformen von progressivem, linearem und degressivem Verlauf zu kombinieren und auch eine Temperaturänderung mit progressiven, degressiven oder linearen Verlauf während der Haltezeit (t2) zu realisieren.

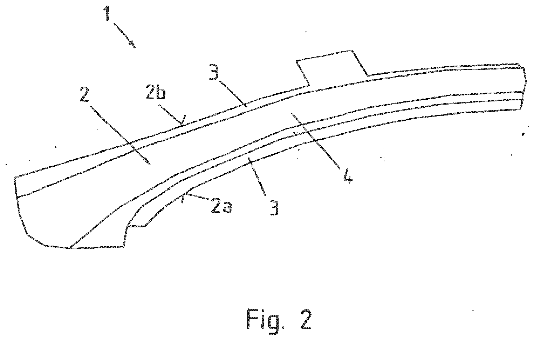

Figur 2 zeigt eine Kraftfahrzeugkomponente 1 in Form einer A-Säule 2 einer hier nicht näher dargestellten Kraftfahrzeugkarosserie. Die A-Säule 2 weist an ihren jeweiligen Seiten 2a, 2b Fügeflansche 3 auf, die mit dem erfindungsgemäßen Verfahren wärmebehandelt sind. Die A-Säule 2 hat demnach durch ihren mittleren Profilteil 4 eine hohe Festigkeit und Härte, die im Crashfall den Schutz eines Fahrgastraumes garantiert und in ihren Fügeflanschen 3 gegenüber dem mittleren Profilteil eine eher duktile Werkstoffeigenschaft, so dass an den Fügeflanschen 3 angebundene Komponenten, die hier nicht näher dargestellt sind, mit der A-Säule 2 verbunden bleiben und kein Abreißen in den Verbindungsstellen, gekennzeichnet durch die Fügeflansche 3, geschieht.

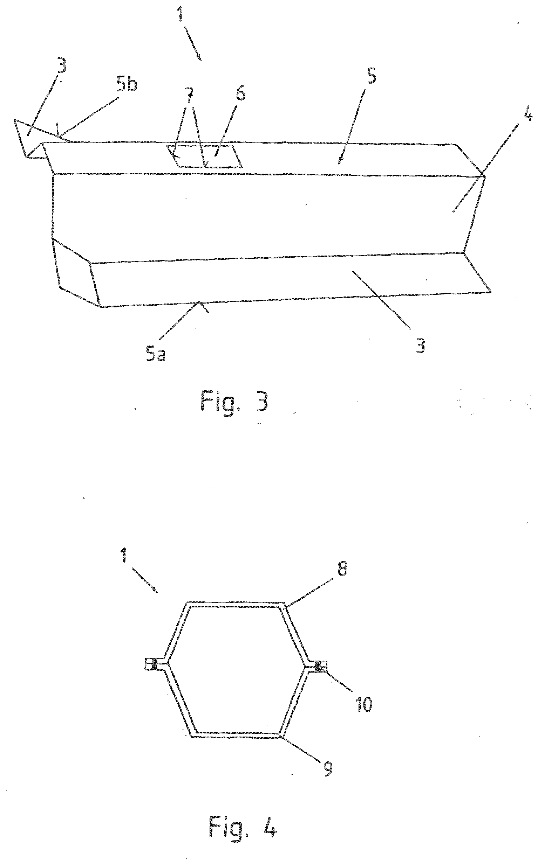

Figur 3 zeigt eine Kraftfahrzeugkomponente 1 in Form eines Getriebetunnels 5. Der Getriebetunnel 5 weist eine Aussparung 6 auf sowie an beiden Seiten 5a, 5b Fügeflansche 3 und einen mittleren Profilteil 4. Auch hier können die Endbereiche 7 der Aussparung 6 sowie die Fügeflansche 3 mit dem erfindungsgemäßen Verfahren wärmebehandelt sein. Im Falle eines Fahrzeugcrashes wird durch die Wärmebehandlung der Endbereiche 7 der Aussparung 6 eine Rissbildung gezielt vermieden, die sich negativ auf das Deformationsverhalten der Kraftfahrzeugkomponente 1, hier in Form des Getriebetunnels 5, auswirken würde.

Figur 4 zeigt eine Kraftfahrzeugkomponente 1, die aus zwei gekoppelten Bauteilen 8, 9 gebaut wurde. In der hier dargestellten Ausführungsvariante ist ein auf die Bildebene bezogenes oberes Bauteil 8, ein warmumgeformtes und pressgehärtetes Bauteil und ein auf die Bildebene bezogenes unteres Bauteil 9, ein mit herkömmlichen Umformverfahren hergestelltes Bauteil. Die zwei Bauteile 8, 9 sind in Koppelungsstellen 10 miteinander gekoppelt. Die Koppelungsstellen 10 wurden nach dem Koppelungsprozess mit einem erfindungsgemäßen Verfahren wärmebehandelt.

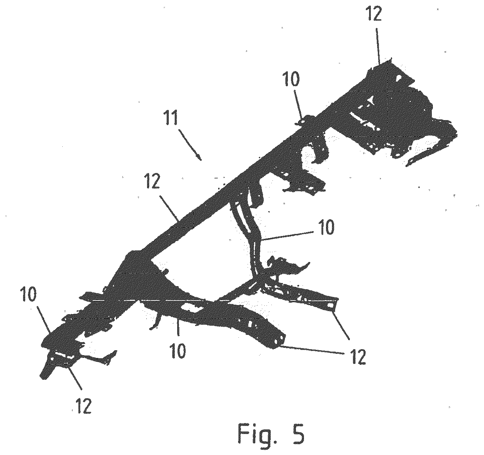

Figur 5 zeigt einen Instrumententräger 11, der aus mehreren Einzelbauteilen 12 zusammengebaut ist. Die Einzelbauteile 12 sind dabei über Koppelungsstellen 10 miteinander gekoppelt.

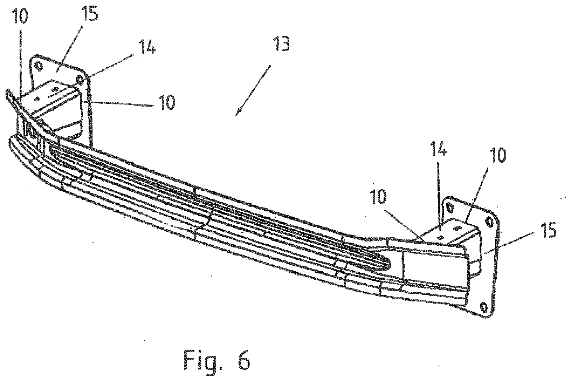

Figur 6 zeigt einen Stoßfänger 13 mit zwei Crashboxen 14 und an die Crashboxen gekoppelte Halteplatten 15. Der Stoßfänger 13 ist durch thermisches Fügen mit den Crashboxen 14 an Koppelungsstellen 10 gekoppelt.

### Bezugszeichen:

- 1 -: Kraftfahrzeugkomponente
- 2 -: A-Säule
- 2a -: Seite zu 2
- 2b -: Seite zu 2
- 3 -: Fügeflansch
- 4 -: mittlerer Profilteil
- 5 -: Getriebetunnel
- 5a -: Seite zu 5
- 5b -: Seite zu 5
- 6 -: Aussparung
- 7 -: Endbereich
- 8 -: oberes Bauteil
- 9 -: unteres Bauteil
- 10 -: Koppelungsstelle
- 11 -: Instrumententräger
- 12 -: Einzelbauteil
- 13 -: Stoßfänger
- 14 -: Crashbox
- 15 -: Halteplatte

- t1 -: Aufwärmzeit
- t2 -: Haltezeit
- t3 -: Abkühlzeit erste Phase

## Patentansprüche

1. Verfahren zur Herstellung einer Kraftfahrzeugkomponente (1) mit mindestens einem warmgeformten und pressgehärteten Bauteil (8, 9) aus hochfestem Stahl, wobei die Kraftfahrzeugkomponente (1) als Strukturbauteil und/oder Sicherheitsbauteil für ein Kraftfahrzeug eingesetzt wird, mit folgenden Verfahrensschritten:
- Partielles Wärmebehandeln der Kraftfahrzeugkomponente (1) in Bereichen, wobei die Bereiche zunächst auf eine Aufwärmtemperatur (T1) in einem Temperaturbereich zwischen 550 und 800° C, insbesondere zwischen 700 und 800° C aufgewärmt werden, wobei die Erwärmung mittels Induktion und/oder Infraroterwärmung erfolgt;
- Halten der Aufwärmtemperatur (T1) für eine Haltezeit (t2) kleiner als 30 Sekunden,
- Abkühlen von der Aufwärmtemperatur (T1) in mindestens zwei Phasen, wobei die zweite Phase direkt auf die erste Phase folgt und die Abkühlzeit der ersten Phase (t3) in Relation zu der Abkühlzeit der zweiten Phase (t4) länger andauernd durchgeführt wird, wobei die zweite Phase in einem Zeitraum (t4) bis zu 120 Sekunden, vorzugsweise bis zu 60 Sekunden durchgeführt wird, wobei das Bauteil (8, 9) durch die erste Phase des Abkühlens (t3) auf eine Temperatur (T2) zwischen 500 und 700° C abgekühlt wird und das Bauteil (8, 9) durch die zweite Phase auf eine Temperatur unter 200° C abgekühlt wird,
- wobei ein Übergangsbereich zwischen dem warmgeformten und pressgehärteten nicht wärmebehandelten Bereich und dem partiell wärmebehandelten Bereich zwischen 1 und 50 mm ausgebildet wird.

2. Verfahren nach Anspruch 1, **dadurch gekennzeichnet, dass** die partielle Wärmebehandlung an Fügeflanschen (3) des Bauteils (8 ,9) durchgeführt wird.

3. Verfahren nach Anspruch 1 oder 2, **dadurch gekennzeichnet, dass** die partielle Wärmebehandlung an einer Aussparung (6) des Bauteils (8, 9) durchgeführt wird.

4. Verfahren nach einem der Ansprüche 1 bis 3, **dadurch gekennzeichnet, dass** die Kraftfahrzeugkomponente (1) aus Bauteilen (8, 9) durch Koppelung gebaut wird und die Wärmebehandlung an den Koppelungsstellen (10) durchgeführt wird.

5. Verfahren nach Anspruch 4, **dadurch gekennzeichnet, dass** die Koppelung durch thermisches Fügen hergestellt wird.

6. Verfahren nach einem der Ansprüche 1 bis 5, **dadurch gekennzeichnet, dass** die Aufwärmung in einem Zeitraum (t1) bis 30 Sekunden, vorzugsweise bis 20 Sekunden, besonders bevorzugt bis 10 Sekunden, insbesondere bis 5 Sekunden durchgeführt wird.

7. Verfahren nach einem der Ansprüche 1 bis 6, **dadurch gekennzeichnet, dass** das die Haltezeit (t2) in einem Zeitraum bis 20 Sekunden, besonders bevorzugt bis 10 Sekunden, insbesondere bis 5 Sekunden durchgeführt wird.

8. Verfahren nach einem der Ansprüche 1 bis 7, **dadurch gekennzeichnet, dass** die Aufwärmtemperatur (T1) durch induktives Erwärmen erreicht wird.

9. Verfahren nach einem der Ansprüche 1 bis 8, **dadurch gekennzeichnet, dass** die Aufwärmtemperatur (T1) durch Infraroterwärmung erreicht wird.

## Claims

1. Method for producing a motor vehicle component (1) having at least one hot-formed and press-hardened part (8, 9) made from high-strength steel, said motor vehicle component (1) being used as a structural component and/or a safety component for a motor vehicle, said method comprising the following steps:
- partial heat-treating of the motor vehicle component (1) in zones, wherein the zones are firstly heated to a heat-up temperature (T1) in a temperature range between 550°C and 800°C, particularly between 700°C and 800°C, the heating being performed by means of induction and/or infra-red heating;
- maintaining the heat-up temperature (T1) for a holding time (t2) of less than 30 seconds;
- cooling down from the heat-up temperature (T1) in at least two phases, the second phase directly following the first phase and the cooling time of the first phase (t3) taking place for a longer duration in relation to the cooling time of the second phase (t4), the second phase taking place over a period (t4) of up to 120 seconds, preferably up to 60 seconds, the component (8, 9) being cooled by the first phase of cooling (t3) to a temperature (T2) of between 500°C and 700°C and the part (8, 9) being cooled by the second phase to a temperature below 200°C,
- a transitional zone of between 1 and 50 mm being formed between the hot-formed and press-hardened, non-heat-treated zone and the partially heat-treated zone.

2. Method according to claim 1, **characterised in that** the partial heat treatment is carried out on joining flanges (3) of the part (8, 9).

3. Method according to claim 1 or 2, **characterised in that** the partial heat treatment is carried out on a cutaway (6) of the part (8, 9).

4. Method according to one of claims 1 to 3, **characterised in that** the vehicle component (1) is constructed from parts (8, 9) by coupling and the heat treatment is carried out at the coupling sites (10).

5. Method according to claim 4, **characterised in that** the coupling is produced by thermal joining.

6. Method according to one of claims 1 to 5, **characterised in that** the heating up is carried out over a period (t1) of up to 30 seconds, preferably up to 20 seconds, particularly preferably up to 10 seconds, especially up to 5 seconds.

7. Method according to one of claims 1 to 6, **characterised in that** the holding time (t2) takes place over a period of up to 20 seconds, particularly preferably up to 10 seconds, especially up to 5 seconds.

8. Method according to one of claims 1 to 7, **characterised in that** the heat-up temperature (T1) is achieved by inductive heating.

9. Method according to one of claims 1 to 8, **characterised in that** the heat-up temperature (T1) is achieved by infra-red heating.

## Revendications

1. Procédé de fabrication d'un élément de véhicule automobile (1) avec au moins une pièce (8, 9) en acier à haute résistance, formée à chaud et durcie sous presse, l'élément de véhicule automobile (1) étant utilisé comme pièce de structure et/ou comme pièce de sécurité pour un véhicule automobile, avec les étapes de procédé suivantes :
- traitement thermique partiel de l'élément de véhicule automobile (1) dans des zones, les zones étant d'abord chauffées à une température de chauffage (T1) comprise dans une plage de température allant de 550°C à 800°C, notamment de 700°C à 800°C, dans lequel le chauffage est effectué par induction et/ou chauffage à infrarouge ;
- maintien de la température de chauffage (T1) pendant un temps de maintien (t2) inférieur à 30 secondes ;
- refroidissement de la température de chauffage (T1) en au moins deux phases, la deuxième phase faisant directement suite à la première phase et le temps de refroidissement de la première phase (t3) étant effectué de manière à durer plus longtemps que le temps de refroidissement de la deuxième phase (t4), la deuxième phase étant effectuée dans un intervalle de temps (t4) allant jusqu'à 120 secondes, de préférence jusqu'à 60 secondes, la pièce (8, 9) étant refroidie par la première phase du refroidissement (t3) à une température (T2) comprise entre 500°C et 700°C et la pièce (8, 9) étant refroidie par la deuxième phase à une température inférieure à 200°C ;
- une zone de transition entre la zone formée à chaud et durcie sous presse non traitée thermiquement et la zone partiellement traitée thermiquement étant conçue entre 1 et 50 mm.

2. Procédé selon la revendication 1, **caractérisé en ce que** le traitement thermique partiel est effectué au niveau de bords à assembler (3) de la pièce (8, 9).

3. Procédé selon la revendication 1 ou 2, **caractérisé en ce que** le traitement thermique partiel est effectué au niveau d'un évidement (6) de la pièce (8, 9).

4. Procédé selon l'une des revendications 1 à 3, **caractérisé en ce que** l'élément de véhicule automobile (1) est construit à partir de pièces (8, 9) par liaison et le traitement thermique est effectué aux points de liaison (10).

5. Procédé selon la revendication 4, **caractérisé en ce que** la liaison est fabriquée par assemblage thermique.

6. Procédé selon l'une des revendications 1 à 5, **caractérisé en ce que** le chauffage est effectué dans un intervalle de temps (t1) allant jusqu'à 30 secondes, de préférence jusqu'à 20 secondes, encore plus de préférence jusqu'à 10 secondes, notamment jusqu'à 5 secondes.

7. Procédé selon l'une des revendications 1 à 6, **caractérisé en ce que** le temps de maintien (t2) est un intervalle de temps allant jusqu'à 20 secondes, de préférence jusqu'à 10 secondes, notamment jusqu'à 5 secondes.

8. Procédé selon l'une des revendications 1 à 7, **caractérisé en ce que** la température de chauffage (T1) est atteinte par un chauffage par induction.

9. Procédé selon l'une des revendications 1 à 8, **caractérisé en ce que** la température de chauffage (T1) est atteinte par un chauffage par infrarouge.
